# EUROPÄISCHE PATENTANMELDUNG

(11) **EP 3 834 659 A1**
(43) Veröffentlichungstag der Anmeldung: **16.06.2021**
(21) Anmeldenummer: 20204079.6
(22) Anmeldetag: 27.10.2020
(51) Int. Cl.: A47B 13/00, F16B 12/44, A47B 13/02, F16B 12/10

(54) **BEFESTIGUNGSVORRICHTUNG UND TISCH MIT EINER SOLCHEN BEFESTIGUNGSVORRICHTUNG**

(30) Priorität: 13.12.2019 DE 102019219588
(71) Anmelder: Kesseböhmer Holding KG, 49152 Bad Essen (DE)
(72) Erfinder: LINDNER, Frank, 73235 Weilheim a. d. Teck (DE)
(74) Vertreter: Prüfer & Partner mbB Patentanwälte · Rechtsanwälte

(57) **Zusammenfassung**

Zur flexiblen Befestigung weist eine Befestigungsvorrichtung (4) zur Befestigung einer Säule (3) an einem Träger (2) auf: Eine Säulenplatte (6), die an einem Ende der Säule (3) befestigbar ist, und ein Aufnahmemittel (5), das an dem Träger (2) befestigbar ist. Das Aufnahmemittel (5) hat eine langgestreckte Form mit einer Längsrichtung (L) und einer in der Längsrichtung (L) vorbestimmten Länge (L_{A}), und einen Querschnitt, wodurch ein Aufnahmeraum (8) ausgebildet ist, der dazu konfiguriert ist, die Säulenplatte (6) in der Längsrichtung (L) verschiebbar und in Richtungen senkrecht zu der Längsrichtung (L) passgenau aufzunehmen. Die Befestigungsvorrichtung (4) weist ein Befestigungselement (10) auf, das dazu konfiguriert ist, die Säulenplatte (6) entlang der Längsrichtung (L) an dem Aufnahmemittel (5) zu befestigen, und die Säulenplatte (6) hat in einem in der Befestigungsvorrichtung (4) montierten Zustand in der Längsrichtung (L) eine Abmessung (Ls), die kleiner als die vorbestimmte Länge (LA) ist.

## Beschreibung

Die Erfindung betrifft eine Befestigungsvorrichtung und einen Tisch mit einer solchen Befestigungsvorrichtung, insbesondere zum Befestigung einer Säule als Tischbein an einem Träger des Tischs als Aufnahme.

Im Bürobereich und in der Caravantechnik werden häufig Trägersysteme verwendet, die für modulare Elemente verwendet werden sollen. So kann es beispielsweise gewünscht sein, dass eine Säule an einer Tischplatte befestigt ist, diese jedoch austauschbar sein soll. Insbesondere im Caravanbereich werden Trägersysteme benötigt, die zusätzlich multi-funktional verwendbar sind, so dass beispielsweise eine an der Säule befestigte Tischplatte gegen ein Bettgestell ausgetauscht werden kann. Zudem sind die Kundenwünsche vorwiegend dahingehend ausgerichtet, dass eine Funktionalität mit Ästhetik, Zuverlässigkeit, Einfachheit der Handhabung sowie einer platzsparenden Lösung kombiniert sein soll.

Insbesondere im Bereich von Trägersystemen stellt dies Konstrukteure vor Probleme, da häufig Kompromisse bezüglich eines dieser Kriterien eingegangen werden müssen. Besonders deutlich zeigt sich dies stets bei Trägersystemen, die mit nachrüstbaren Systemen kombinierbar sein sollen, oder die individuell auf verschiedene Kundenkreise angepasst werden sollen. Häufig werden für solche Systeme Schrauben oder Flügelschrauben für die Befestigung der Bauteile verwendet, Dies ist jedoch in der Ausführung optisch nicht ansprechend, und stellt somit einen Kompromiss bezüglich der Ästhetik dar. Zudem birgt ein hervorstehendes Teil, beispielsweise eine Schraube, auch immer ein Verletzungsrisiko. Außerdem ist ein Umbau solch eines Systems oft zeitaufwendig und umständlich.

Um dieses Problem zu lösen, ist aus dem Stand der Technik ein Klemmsystem bekannt, in dem eine Befestigungsvorrichtung vorhanden ist, die beispielsweise eine Säulenplatte an einem oberen Ende der Säule mittels Exzenter gegen eine Unterseite der Tischplatte drückt und somit verklemmt. Für eine definierte Position der Säule bezüglich der Tischplatte weist die Befestigungseinrichtung ein Anschlagelement auf, an dem die Säulenplatte angestoßen wird. In dieser Position wird die Säulenplatte verklemmt und somit in der definierten Position an der Tischplatte befestigt.

Diese Befestigung weist jedoch den Nachteil auf, dass durch die so festgelegte definierte Position bei einer Veränderung der Anforderung an die Tischplatte, beispielsweise eine nachträgliche exzentrische Installation von schweren Geräten auf der Tischplatte, die Tischplatte verformt wird. Außerdem werden durch eine exzentrische Belastung gegebenenfalls Teleskopsäulen einer höhenverstellbaren Tischplatte mit einem großen Moment belastet, was einen erhöhten Verschleiß verursacht. Schließlich muss die definierte Position der Säule an der Tischplatte für Tischplatten in verschiedenen Größen und Formen im Voraus festgelegt werden, was wiederum einen erhöhten Aufwand bedeutet.

Die der Erfindung zugrunde liegende Aufgabe liegt darin, die obigen Nachteile zu beseitigen und ein Befestigungssystem und einen Tisch bereitzustellen, die eine flexible Positionierung einer Säule zu einer Tischplatte ermöglichen.

Die Aufgabe wird durch eine Befestigungsvorrichtung gemäß Anspruch 1 und einen Tisch gemäß Anspruch 12 gelöst. Vorteilhafte Weiterentwicklungen sind in den abhängigen Ansprüchen enthalten.

Gemäß einem Aspekt der Erfindung weist eine Befestigungsvorrichtung zur Befestigung einer Säule an einem Träger eine Säulenplatte, die an einem Ende der Säule befestigbar ist, und ein Aufnahmemittel, das an dem Träger befestigbar ist, auf. Das Aufnahmemittel hat eine langgestreckte Form mit einer Längsrichtung mit einer in der Längsrichtung vorbestimmten Länge und einen derartigen Querschnitt, dass ein Aufnahmeraum ausgebildet wird, der dazu konfiguriert ist, die Säulenplatte in der Längsrichtung verschiebbar und in Richtungen quer bzw. senkrecht zu der Längsrichtung passgenau aufzunehmen. Die Befestigungsvorrichtung weist ferner ein Befestigungselement auf, das dazu konfiguriert ist, die Säulenplatte entlang der Längsrichtung an einer beliebigen Stelle an dem Aufnahmemittel zu befestigen, und die Säulenplatte hat in einem in der Befestigungsvorrichtung befestigten Zustand in der Längsrichtung des Aufnahmemittels eine Abmessung, die kleiner als die vorbestimmte Länge des Aufnahmemittels ist.

Eine solche Befestigungsvorrichtung ermöglicht es, die Säule mittels der Säulenplatte an dem Träger, der als eine Tischplatte ausgebildet sein kann, entlang der Längsrichtung des Aufnahmemittels in einer beliebigen für diese Anwendung geeigneten Position zu befestigen. Dadurch können auftretende Kräfte und Momente minimiert werden und Verformungen und Verschleiß können verhindert oder verringert werden. Bei einer entsprechenden Ausbildung des Befestigungselements kann eine Befestigung der Säule einfach wieder gelöst werden und die Säule entlang des Aufnahmemittels an einer anderen, gegebenenfalls geeigneteren, Position befestigt werden, ohne dass das Aufnahmemittel an dem Träger versetzt werden muss.

Gemäß einer vorteilhaften Weiterbildung der Befestigungsvorrichtung erstreckt sich der Aufnahmeraum über die vorbestimmte Länge des Aufnahmemittels, so dass die Säulenplatte innerhalb der gesamten vorbestimmten Länge des Aufnahmeraums in der Längsrichtung verschiebbar ist,

Dadurch ist eine größtmögliche Flexibilität hinsichtlich der Position der Säule in der Längsrichtung des Aufnahmemittels möglich.

In einer weiteren vorteilhaften Ausgestaltung der Befestigungsvorrichtung weist das Aufnahmemittel drei in der Längsrichtung zumindest abschnittsweise durchgehende Wände auf, sowie eine Wand, die in der Längsrichtung einen durchgehenden Schlitz aufweist, um den Aufnahmeraum auszubilden, wobei innere Abmessungen des Aufnahmeraums senkrecht zu der Längsrichtung so vorbestimmt sind, dass die Säulenplatte annähernd spielfrei in dem Aufnahmeraum vorgesehen ist.

Durch die drei zumindest abschnittsweise durchgehenden Wände und die Wand, die den durchgehenden Schlitz aufweist, wird es ermöglicht, das Aufnahmemittel mit einer geeigneten Festigkeit und Steifigkeit bereitzustellen. Die annähernd spielfreie Aufnahme der Säulenplatte in dem Aufnahmeraum bedeutet, dass in den Richtungen senkrecht zu der Längsrichtung des Aufnahmemittels eine Differenz einer Abmessung der Säulenplatte von einer Innenabmessung des Aufnahmeraums so gewählt ist, dass die Säulenplatte in der Längsrichtung des Aufnahmemittels frei in dem Aufnahmemittel verschoben werden kann, jedoch senkrecht zur Längsrichtung möglichst kein Spiel vorhanden ist.

Bei einer weiteren vorteilhaften Ausgestaltung der Befestigungsvorrichtung weist der Aufnahmeraum zwei gegenüberliegende erste Wände, die kürzer als eine dazwischenliegende zweite Wand sind, auf und der durchgehende Schlitz ist in einer weiteren zwischen den ersten Wänden liegenden zweiten Wand vorgesehen.

Durch die Wände wird der Aufnahmeraum gebildet, in den die Säulenplatte für die spielfreie Aufnahme aufgenommen werden kann. Der durchgehende Schlitz ist für ein Herausstehen der Säule aus dem Aufnahmeraum vorgesehen. Durch das Vorsehen des durchgehenden Schlitzes in einer der längeren Wände kann die Höhe des Aufnahmeraums, und somit auch des Aufnahmemittels, klein gewählt werden. Somit ist kein unnötiger Bauraum erforderlich, um beispielsweise Zubehör unten an der Tischplatte einfacher anbringen zu können oder Designvorgaben zu erfüllen.

Gemäß einer weiteren vorteilhaften Ausgestaltung der Befestigungsvorrichtung sind an den durchgehenden Schlitz angrenzende Endabschnitte der einen der zweiten Wände so geformt, dass sie zu der anderen der zweiten Wände hin ragen.

Indem diese Endabschnitte zu der anderen zweiten Wand hin ragen, werden die Steifigkeit und die Festigkeit des Aufnahmemittels erhöht und es entsteht jeweils eine zum Aufnahmeraum hin offene Kammer, so dass die Möglichkeit besteht, das Befestigungselement in dieser Kammer in einer festgelegten Position senkrecht zur Längsrichtung des Aufnahmemittels unterzubringen.

Bei einer weiteren vorteilhaften Ausgestaltung der Befestigungsvorrichtung ist das Aufnahmemittel aus Stahl hergestellt.

Diese Wahl des Materials sorgt für eine hohe Festigkeit und Steifigkeit auch bei geringen Wandstärken und somit geringem Materialeinsatz.

In einer weiteren vorteilhaften Ausgestaltung der Befestigungsvorrichtung ist das Befestigungselement dazu konfiguriert, die Säulenplatte in einer der Richtungen senkrecht zu der Längsrichtung in dem Aufnahmeraum zu verklemmen.

Bei dem Verklemmen der Säulenplatte in dem Aufnahmeraum ist, insbesondere bei einem Verklemmen in Richtung des Trägers, die Spielfreiheit in dieser Richtung gewährleistet, so dass eine solide Befestigung der Säule an dem Träger möglich ist. Durch das Verklemmen ist es außerdem möglich, die Befestigung einfach wieder zu lösen ohne Bauteile zu beschädigen und die Säule in einer anderen Position an dem Träger zu befestigen.

Gemäß einer vorteilhaften Ausgestaltung der Befestigungsvorrichtung weist das Befestigungselement eine Klemmschraube auf.

Die Klemmschraube ist ein günstiges, mit gewünschten Eigenschaften einfach zu beschaffendes, Klemmmittel.

Gemäß einer anderen vorteilhaften Ausgestaltung der Befestigungsvorrichtung weist das Befestigungselement ein nocken- oder ellipsenförmiges Klemmelement auf.

Durch das nocken- oder ellipsenförmiges Klemmelement besteht die Möglichkeit, das Verklemmen mit Hilfe einer Bewegung mit geringem Ausmaß schnell und sicher durchzuführen.

In einer weiteren vorteilhaften Ausgestaltung der Befestigungsvorrichtung weist das Aufnahmemittel ein Befestigungsmittel auf, mittels dessen das Aufnahmemittel entlang dem Träger in der Richtung senkrecht zu der Längsrichtung des Aufnahmemittels verschiebbar an dem Träger befestigbar ist.

Durch dieses Befestigungsmittel, mittels dessen das Aufnahmemittel in einer Richtung quer bzw. senkrecht zu dessen Längsrichtung verschoben befestigt werden kann, ist es möglich, die Flexibilität hinsichtlich der Befestigung der Säule an dem Träger weiter zu erhöhen, da damit die Befestigungsposition der Säule an dem Träger in Verbindung mit der Verschiebbarkeit in der Längsrichtung zweidimensional wählbar ist und die Position der Säule an dem Träger noch besser an die Anforderungen angepasst werden kann.

Gemäß einer weiteren vorteilhaften Ausgestaltung der Befestigungsvorrichtung weist das Befestigungsmittel entlang dem Träger Langlöcher mit einem Verschiebebereich quer zu der Längsrichtung des Aufnahmemittels auf.

Die Langlöcher, in denen beispielsweise in der Aufnahme befestigte Schrauben quer zur Längsrichtung des Aufnahmemittels verschoben werden können, können einfach und kostengünstig in das Aufnahmemittel eingebracht werden.

Gemäß einem weiteren Aspekt der Erfindung weist ein Tisch einen Träger, eine Säule und eine Befestigungsvorrichtung auf, bei der die Säulenplatte in einem in der Befestigungsvorrichtung befestigten Zustand in der Längsrichtung des Aufnahmemittels eine Abmessung hat, die kleiner als die vorbestimmte Länge des Aufnahmemittels ist.

Dieser Tisch ermöglicht es, die Säule mittels der Säulenplatte mittels des Befestigungselements an dem Träger entlang der Längsrichtung des Aufnahmemittels in einer beliebigen für diese Anwendung geeigneten Position zu befestigen. Dadurch können auftretende Kräfte und Momente minimiert werden und Verformungen und Verschleiß können verhindert oder verringert werden. Bei einer entsprechenden Ausbildung des Befestigungselements kann eine Befestigung der Säule außerdem einfach wieder gelöst werden und die Säule entlang des Aufnahmemittels an einer anderen, gegebenenfalls geeigneteren, Position befestigt werden, ohne dass das Aufnahmemittel an dem Träger versetzt werden muss.

In einer vorteilhaften Ausbildung des Tischs, weist der Träger eine vorbestimmte Länge auf und die vorbestimmte Länge des Aufnahmemittels entspricht annähernd der Länge des Trägers, so dass die Säulenplatte über annähernd die gesamte Länge des Trägers verschiebbar ist.

Dadurch besteht die Möglichkeit, die Säule entlang der annähernd gesamten Trägerlänge an einer geeigneten Stelle oder mehrere Säulen entlang der annähernd gesamten Trägerlänge an mehreren geeigneten Stellen zu befestigen. "Der annähernd gesamten Trägerlänge entsprechend" bedeutet, dass am Rand des Trägers gegebenenfalls Designelemente oder funktionale Elemente vorgesehen sein können, so dass das Aufnahmemittel nicht bis zu äußeren Kanten des Trägers reicht.

Gemäß einer weiteren vorteilhaften Ausgestaltung des Tischs weist der Tisch kein Anschlagelement im Bereich der Befestigungsvorrichtung so auf, dass eine Bewegung der Säulenplatte durch das Anschlagelement gestoppt wird.

Dabei kann die Säulenplatte in dem Aufnahmeraum in der Längsrichtung des Aufnahmemittels in eine beliebige Position gebracht werden, ohne dass beispielsweise ein Entfernen der Säulenplatte aus dem Aufnahmemittel und ein erneutes Einbringen von einer anderen Seite in das Aufnahmemittel erforderlich ist, um die Säulenplatte in der beliebigen Position an dem Aufnahmemittel zu befestigen.

Nachfolgend wird die Erfindung unter Bezugnahme auf die beigefügten Zeichnungen anhand von Ausführungsbeispielen im Detail erläutert.

Insbesondere zeigt
- Fig. 1: einen Tisch als eine Trägereinheit in einem zusammengebauten Zustand;
- Fig. 2: eine Ansicht des Tischs mit einer Befestigungseinrichtung von unten, ohne Säule;
- Fig.3: einen Querschnitt einer Befestigungsvorrichtung gemäß einer ersten Ausführungsform; und
- Fig. 4: eine isometrische Ansicht des in Fig. 1 markierten Abschnitts A des Tischs mit einer Befestigungsvorrichtung gemäß einer zweiten Ausführungsform.

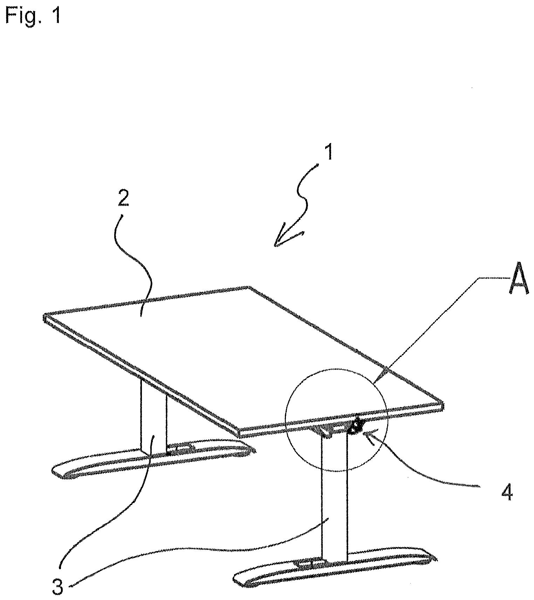

**Fig. 1** zeigt ein Möbel, nämlich einen Tisch 1 als eine Trägereinheit in einem zusammengebauten Zustand. Der Tisch 1 weist eine Tischplatte als einen Träger 2 und zwei Säulen 3 auf. In alternativen Ausführungsformen weist der Tisch 1 eine andere Anzahl von Säulen, nämlich entweder lediglich eine Säule 3 oder mehr als zwei Säulen 3 auf. Ferner weist der Tisch 1 eine Befestigungsvorrichtung 4 zur Befestigung der Säule 3 an dem Träger 2 auf. Die Befestigungsvorrichtung 4 ist über eine gesamte Länge des Trägers 2 vorgesehen. Alternativ kann die Länge der Befestigungsvorrichtung 4 auch nur annähernd der Länge des Trägers 2 entsprechen, oder eine Länge aufweisen, die wesentlich kürzer als die Länge des Trägers 2 ist. Weiter besteht alternativ die Möglichkeit, dass mehrere Befestigungsvorrichtungen 4 vorgesehen sind.

Der Tisch 1 weist weder an dem Träger 2 noch an der Befestigungsvorrichtung 4 ein Anschlagelement auf, so dass eine Bewegung der Säule 3 entlang einer Längsrichtung der Befestigungsvorrichtung 4 nicht durch ein Anschlagelement gestoppt wird.

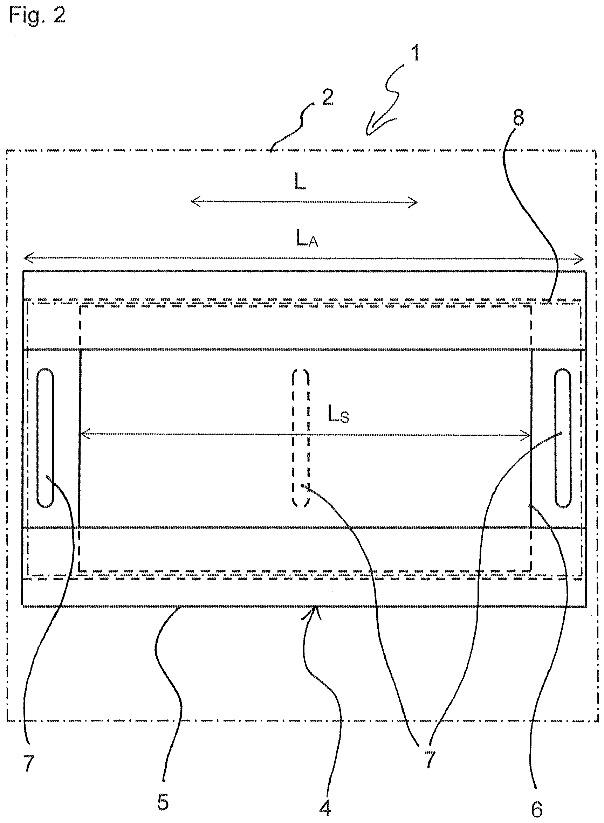

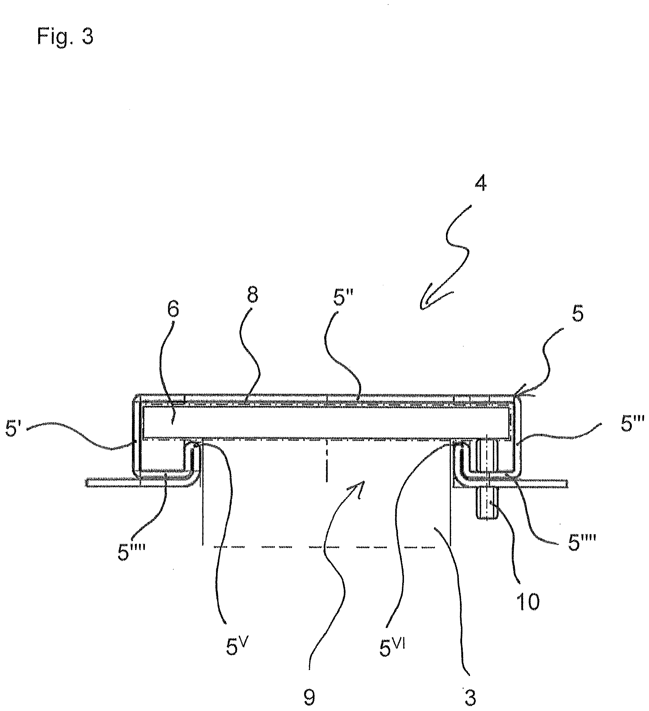

Die **Figs. 2** und **3** zeigen eine Ansicht des Tischs 1 mit der Befestigungsvorrichtung 4 bzw. der Befestigungsvorrichtung 4 und einer Säulenplatte 6 einer (nur in Fig. 3 dargestellten) Säule 3 von unten und von der Seite. Die Befestigungsvorrichtung 4 weist ein Aufnahmemittel 5 und ferner eine Säulenplatte 6 auf. Das Aufnahmemittel 5, und somit auch die Befestigungsvorrichtung 4, haben eine langgestreckte Form mit einer Längsrichtung L und das Aufnahmemittel 5 hat eine in der Längsrichtung L vorbestimmte Länge L_{A} und ist an dem Träger 2, also hier der Tischplatte, befestigt.

Die Säulenplatte 6 ist in der Längsrichtung L grundsätzlich verschiebbar und hat, wie in Fig. 2 zu sehen, eine Abmessung Ls in der Längsrichtung L, die kleiner als die vorbestimmte Länge L_{A} des Aufnahmemittels 5 ist. Die vorbestimmte Länge L_{A} des Aufnahmemittels 5 ist im vorliegenden Ausführungsbeispiel kürzer als der Träger 2, kann aber alternativ auch gleich lang sein. Weiter können alternativ auch mehrere Säulen 3 über eine jeweilige Säulenplatte 6 an dem Aufnahmemittel 5 befestigt sein.

Darüber hinaus weist die Befestigungsvorrichtung 4 vier Langlöcher als ein Befestigungsmittel 7 zum Befestigen des Aufnahmemittels 5 an dem Träger 2 auf. Die Langlöcher erstrecken sich entlang dem Träger 2 quer bzw. senkrecht zur Längsrichtung L des Aufnahmemittels 5, haben also einen Verschiebebereich quer bzw. senkrecht zu der Längsrichtung L des Aufnahmemittels 5. Durch dieses Befestigungsmittel 7 ist das Aufnahmemittel 5 mittels Schrauben in einer Richtung quer bzw. senkrecht zu der Längsrichtung L des Aufnahmemittels 5 verschiebbar an dem Träger 2 befestigbar. In alternativen Ausführungsformen ist kein Befestigungsmittel 7, das das Verschieben quer zu der Längsrichtung L ermöglicht, vorgesehen, oder das Befestigungsmittel 7 ist in einer anderen Form, beispielsweise als Schienen, ausgeführt.

**Fig. 3** zeigt einen Querschnitt der Befestigungsvorrichtung 4 gemäß einer ersten Ausführungsform mit dem Aufnahmemittel 5 und der Säulenplatte 6. Die Säulenplatte 6 ist an einem Ende der Säule 3 befestigt.

Das Aufnahmemittel 5 hat einen Querschnitt, der gemäß Fig. 3 einen mit Strich-Punkt-Linien dargestellten Aufnahmeraum 8 aufweist, der die Säulenplatte 6 in der Längsrichtung L (Fig. 2) verschiebbar und in Richtungen quer bzw. senkrecht zu der Längsrichtung L passgenau aufnimmt. Der Querschnitt des Aufnahmemittels 5 weist drei durchgehende Wände bzw. Wandabschnitte 5', 5", 5'" auf, die wie in Fig. 3 gezeigt ein umgekehrtes U, also zwei Schenkelabschnitte 5' und 5'", die durch den Stegabschnitt 5" miteinander verbunden sind, formen. An den unteren Schenkelabschnitten der Wandabschnitte 5' und 5'" schließt sich jeweils ein Wandabschnitt 5"" an, die zwar aufeinander zu laufen, aber einen Abstand mit den Abmessungen der Säule 3 offen lassen, so dass die Säule 3 durch den dadurch gebildeten Schlitz 9 passt. Der Schlitz 9 verläuft durchgehend in der Längsrichtung L. Der Aufnahmeraum 8 selbst wird also gebildet aus den zwei gegenüberliegenden ersten kurzen Wandabschnitten 5', 5"', dem diese verbindenden Stegabschnitt 5", sowie den zwei sich gegenüberliegenden Wandabschnitten 5"", 5"" und imaginär aus dem Schlitz 9. Das Aufnahmemittel 5 ist aus Stahl hergestellt.

In alternativen Ausführungsformen hat der Querschnitt des Aufnahmemittels 5 eine andere Form und/oder ist durch andere Elemente des Aufnahmemittels 5 ausgebildet, um den Aufnahmeraum 8 beispielsweise in einer ovalen Form zu bilden. Weiter sind die drei durchgehenden Wände 5', 5", 5"' in Ihrem Längenverlauf entlang der Länge L alternativ abschnittsweise mit Ausbrüchen versehen. Ferner ist das Aufnahmemittel 5 in einer alternativen Ausführungsform nicht aus Stahl, sondern beispielsweise aus einem Aluminium-Strangpressprofil hergestellt.

Die Säulenplatte 6 ist in dem Aufnahmeraum 8 annähernd spielfrei aufgenommen, wobei in Richtungen senkrecht zur Längsrichtung L des Aufnahmemittels 5 ein Unterschied zwischen einer Außenabmessung der Säulenplatte 6 und einer Innenabmessung des Aufnahmeraums 8 so gewählt ist, dass die Säulenplatte 6 in der Längsrichtung L des Aufnahmemittels 5 frei in dem Aufnahmemittel verschoben werden kann, jedoch senkrecht zur Längsrichtung L möglichst kein Spiel vorhanden ist.

Wie in Fig. 2 zu sehen ist, erstreckt sich der Aufnahmeraum 8 über die gesamte vorbestimmte Länge L_{A} des Aufnahmemittels 5, so dass die Säulenplatte 6 innerhalb des Aufnahmeraums 8 in der Längsrichtung L verschiebbar ist. Lediglich aus Gründen einer deutlichen Darstellung des Aufnahmeraums 8 ist der Aufnahmeraum 8 geringfügig kürzer dargestellt.

In Fig. 3 ist ein Befestigungselement 10 gezeigt, das die Säulenplatte 6 in der Längsrichtung L an einer beliebigen Stelle an dem Aufnahmemittel 5 befestigt. Das Befestigungselement 10 weist eine Klemmschraube auf. Ferner sind in den Wandabschnitten 5"" Durchgangslöcher mit Gewinde vorgesehen, in die die Klemmschraube als Befestigungselement 10 eingeschraubt werden können und das Ende der Schraube wird beim Einschrauben gegen die Säulenplatte 6 geschraubt. Das Befestigungselement 10 verklemmt somit die Säulenplatte 6 in dem Aufnahmeraum 8 in einer der Richtungen senkrecht zu der Längsrichtung L. Die Säulenplatte 6 ist in einer in der in Fig. 3 vertikalen Richtung gegen die zweite Wand 5" verklemmt, kann alternativ aber auch in der vertikalen Richtung gegen die zweite Wand 5"" oder in einer in Fig. 3 horizontalen Richtung gegen eine der ersten Wände 5', 5"' verklemmt sein.

Endabschnitte 5^{V}, 5^{VI} der einen zweiten Wand 5"" werden durch ein Umlegen eines Materials der zweiten Wand 5"" gebildet. Die Endabschnitte 5^{V}, 5^{VI} ragen zu der zweiten Wand 5" hin. Dadurch werden Räume 11 zwischen der der einen zweiten Wand 5"" und dem Aufnahmeraum 8 gebildet.

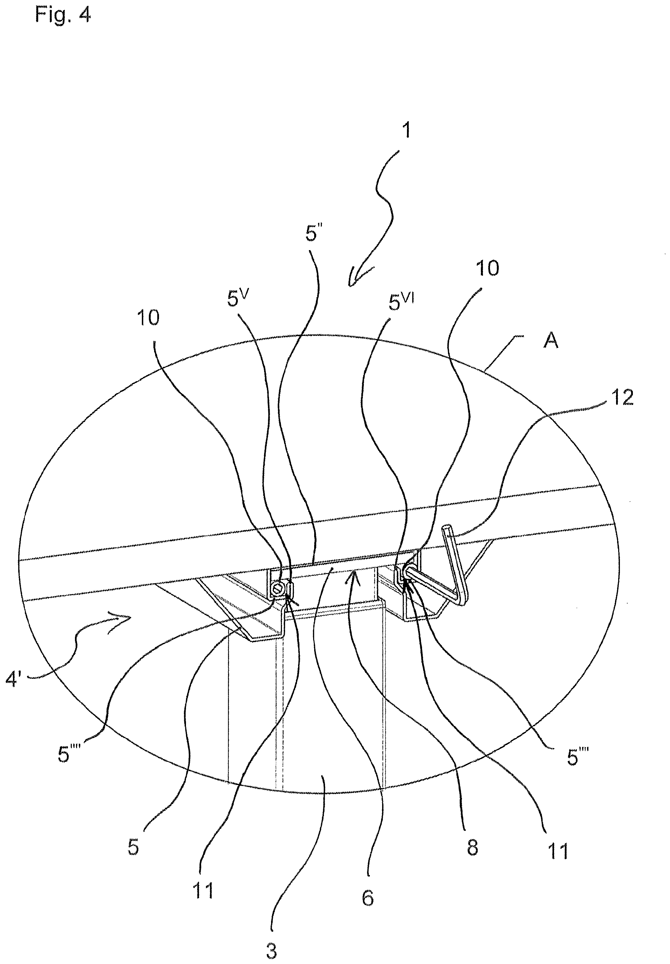

**Fig. 4** zeigt eine isometrische Ansicht des in Fig. 1 markierten Abschnitts A des Tischs 1 mit einer Befestigungsvorrichtung 4' gemäß einer zweiten Ausführungsform.

Die Befestigungsvorrichtung 4' gemäß der zweiten Ausführungsform unterscheidet sich von der Befestigungsvorrichtung 4 gemäß der ersten Ausführungsform nur darin, dass sich äußere Bereiche des Querschnitts des Aufnahmemittels 5 unterscheiden, wobei der Aufnahmeraum 8 analog vorgesehen ist. Durch die zu der anderen der zweiten Wand 5" ragenden Endabschnitte 5^{V}, 5^{VI} der einen zweiten Wand 5"" werden Räume 11 zwischen der der einen zweiten Wand 5"" und dem Aufnahmeraum 8 gebildet. In diesen Räumen 11 ist jeweils ein ellipsenförmiges Klemmelement als das Befestigungselement 10 vorgesehen. Alternativ kann auch ein nockenförmiges Klemmelement als das Befestigungselement 10 vorgesehen sein.

Das ellipsenförmige Klemmelement wird mittels eines Werkzeugs 12 so verdreht, dass die Säulenplatte 6 damit gegen die zweite Wand 5" verklemmt wird.

Im Gebrauch wird die Säulenplatte 6 mit der daran montierten Säule 3 in das Aufnahmemittel 5 eingeschoben. Sobald sich die Säule 3, und damit auch die Säulenplatte 6, in der Längsrichtung L des Aufnahmemittels 5 an einer geeigneten Stelle befindet, wird die Säulenplatte 6 mittels des Befestigungselements 10 an dem Aufnahmemittel 5 befestigt.

Optional wird im Voraus das Aufnahmemittel 5 mittels des Befestigungsmittels 7 in einer geeigneten Position in der Richtung senkrecht zu der Längsrichtung L des Aufnahmemittels 5 an dem Träger 2 befestigt.

Für eine nachträgliche Änderung der Position der Säule 3 wird das Befestigungselement 10 gelöst, die Säule 3 mit der Säulenplatte 6 wird an eine andere geeignete Position in der Längsrichtung L des Aufnahmemittels 5 geschoben und mittels des Befestigungselements 10 wieder befestigt.

Alternativ zum ersten Ausführungsbeispiel kann die Geometrie des Aufnahmemittels 5 analog zum zweiten Ausführungsbeispiel ausgebildet sein. Das Durchgangsloch ist dann jedoch nicht mit dem Gewinde ausgestattet und das Befestigungselement 10 ist als Klemmschraube ausgebildet, die mit einer (nicht dargestellten) Mutter, die zwischen dem Wandabschnitt 5"" und der Säulenplatte 6 eingelegt ist, verschraubt wird. Somit kann sich die Klemmschraube mit Hilfe der Mutter an der Oberseite des Wandabschnitts 5"" abstützen und das Schraubenende kann gegen die Säulenplatte drücken.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Befestigungsvorrichtung (4) zur Befestigung einer Säule (3) an einem Träger (2), wobei die Befestigungsvorrichtung (4) aufweist:
eine Säulenplatte (6), die an einem Ende der Säule (3) befestigbar ist, und
ein Aufnahmemittel (5), das an dem Träger (2) befestigbar ist,
wobei
das Aufnahmemittel (5) eine langgestreckte Form mit einer in einer Längsrichtung (L) vorbestimmten Länge (L_{A}) und einen derartigen Querschnitt hat, dass ein Aufnahmeraum (8) ausgebildet ist, der dazu konfiguriert ist, die Säulenplatte (6) in der Längsrichtung (L) verschiebbar und in Richtungen senkrecht zu der Längsrichtung (L) passgenau aufzunehmen,
die Befestigungsvorrichtung (4) ein Befestigungselement (10) aufweist, das dazu konfiguriert ist, die Säulenplatte (6) entlang der Längsrichtung (L) an einer beliebigen Stelle an dem Aufnahmemittel (5) zu befestigen, und
die Säulenplatte (6) in einem in der Befestigungsvorrichtung (4) befestigten Zustand in der Längsrichtung (L) des Aufnahmemittels (5) eine Abmessung (Ls) hat, die kleiner als die vorbestimmte Länge (L_{A}) des Aufnahmemittels (5) ist.

2. Befestigungsvorrichtung (4) gemäß Anspruch 1, wobei
sich der Aufnahmeraum (8) über die vorbestimmte Länge (L_{A}) des Aufnahmemittels (5) erstreckt, so dass die Säulenplatte (6) innerhalb der gesamten vorbestimmten Länge (L_{A}) des Aufnahmemittels (5) in der Längsrichtung verschiebbar ist.

3. Befestigungsvorrichtung (4) gemäß Anspruch 1 oder 2, wobei
zur Bildung des Aufnahmeraums (8) das Aufnahmemittel (5) drei in der Längsrichtung (L) zumindest abschnittsweise durchgehende Wände (5', 5", 5"') aufweist, sowie eine Wand (5""), die in der Längsrichtung (L) einen durchgehenden Schlitz (9) zum Hindurchragen der Säule (3) aufweist, wobei innere Abmessungen des Aufnahmeraums (8) senkrecht zu der Längsrichtung so vorbestimmt sind, dass die Säulenplatte (6) annähernd spielfrei in dem Aufnahmeraum (8) vorgesehen ist.

4. Befestigungsvorrichtung (4) gemäß Anspruch 3, wobei
der Aufnahmeraum (8) zwei gegenüberliegende erste Wände (5', 5'''), die kürzer als eine dazwischenliegende zweite Wand (5") sind, aufweist und der durchgehende Schlitz (9) in einer weiteren zwischen den ersten Wänden liegenden zweiten Wand (5"") vorgesehen ist.

5. Befestigungsvorrichtung (4) gemäß Anspruch 4, wobei
an den durchgehenden Schlitz (9) angrenzende Endabschnitte (5ᵥ, 5ᵥₗ) einer der zweiten Wände (5"") so geformt sind, dass sie zu der anderen der zweiten Wände (5") hin ragen.

6. Befestigungsvorrichtung (4) gemäß einem der vorangehenden Ansprüche, wobei
das Aufnahmemittel (5) aus Stahl hergestellt ist.

7. Befestigungsvorrichtung (4) gemäß einem der vorangehenden Ansprüche, wobei
das Befestigungselement (10) dazu konfiguriert ist, die Säulenplatte (6) in einer der Richtungen quer zu der Längsrichtung (L) in dem Aufnahmeraum (8) zu verklemmen.

8. Befestigungsvorrichtung (4) gemäß Anspruch 7, wobei das Befestigungselement (10) eine Klemmschraube aufweist.

9. Befestigungsvorrichtung (4) gemäß Anspruch 7, wobei das Befestigungselement (10) ein nocken- oder ellipsenförmiges Klemmelement aufweist.

10. Befestigungsvorrichtung (4) gemäß einem der vorangehenden Ansprüche, wobei
das Aufnahmemittel (5) ein Befestigungsmittel (7) aufweist, mittels dessen das Aufnahmemittel (5) entlang dem Träger (2) in der Richtung senkrecht zu der Längsrichtung (L) des Aufnahmemittels (5) verschiebbar an dem Träger (2) befestigbar ist.

11. Befestigungsvorrichtung (4) gemäß Anspruch 10, wobei
das Befestigungsmittel (7) entlang dem Träger (2) Langlöcher mit einem Verschiebebereich senkrecht zu der Längsrichtung (L) des Aufnahmemittels (5) aufweist.

12. Tisch (1) mit einem Träger (2), einer Säule (3) und einer Befestigungsvorrichtung (4) gemäß einem der vorangehenden Ansprüche.

13. Tisch (1) gemäß Anspruch 12, wobei
der Träger (2) eine vorbestimmte Länge (L_{T}) aufweist und die vorbestimmte Länge (L_{A}) des Aufnahmemittels (5) annähernd der Länge (L_{T}) des Trägers (2) entspricht, so dass die Säulenplatte (6) über annähernd die gesamte Länge des Trägers (2) verschiebbar ist.

14. Tisch (1) gemäß Anspruch 12 oder 13, wobei
der Tisch (1) kein Anschlagelement im Bereich der Befestigungsvorrichtung (4) so aufweist, dass eine Bewegung der Säulenplatte (6) entlang der Längsrichtung (L) des Aufnahmemittels (5) durch das Anschlagelement gestoppt wird.
